# EUROPÄISCHE PATENTANMELDUNG

(11) **EP 1 229 289 A2**
(43) Veröffentlichungstag der Anmeldung: **07.08.2002**
(21) Anmeldenummer: 01130318.7
(22) Anmeldetag: 19.12.2001
(51) Int. Cl.: F21V 8/00, G02B 5/00

(54) **Einrichtung zum Erzeugen eines viereckigen, leuchtenden Feldes und Verwendung einer solchen Einrichtung bei einer Optikvorrichtung mit einer zu beleuchtenden Fläche vorbestimmter Form**

(30) Priorität: 24.01.2001 DE 10103097
(71) Anmelder: CARL ZEISS JENA GmbH, 07745 Jena (DE)
(72) Erfinder: Symanowski, Christfried, 07745 Jena (DE); Schröter, Gudrun, 07747 Jena (DE); Schmidt, Dietrich, 07747 Jena (DE)
(74) Vertreter: Grimm, Christian Jan Rainer

(57) **Zusammenfassung**

Bei einer Einrichtung zum Erzeugen eines viereckigen, leuchtenden Feldes, mit einem einen viereckigen Querschnitt umfassenden Lichtmischstab (2), der eine viereckige Eintrittsfläche (7) und eine viereckige Austrittsfläche (8) aufweist und über die Eintrittsfläche (7) in den Lichtmischstab (2) eingekoppeltes Licht zur Austrittsfläche (8) führt. Um in dieser das viereckige, leuchtende Feld zu erzeugen, ist die Austrittsfläche (8) von vier geradlinigen Seiten begrenzt, von denen in einem der Eckpunkte der Austrittsfläche (8) jeweils zwei unter einem Winkel zusammenlaufen, der ungleich 90° ist.

## Beschreibung

Die Erfindung bezieht sich auf eine Einrichtung zum Erzeugen eines viereckigen, leuchtenden Feldes, mit einem einen viereckigen Querschnitt aufweisenden Lichtmischstab, der eine viereckige Eintrittsfläche und eine viereckige Austrittsfläche aufweist und der über die Eintrittsfläche eingekoppeltes Licht zur Austrittsfläche führt, um in dieser das viereckige, leuchtende Feld zu erzeugen, wobei die Austrittsfläche von vier geradlinigen Seiten begrenzt ist, von denen sich jeweils zwei in einem der Eckpunkte der Austrittsfläche treffen. Die Erfindung bezieht sich ferner auf die Verwendung einer solchen Einrichtung zum Erzeugen eines viereckigen, leuchtenden Feldes bei einer Optikvorrichtung mit einer zu beleuchtenden Fläche vorbestimmter Form und einer Beleuchtungsoptik, die die Austrittsfläche auf die zu beleuchtende Fläche abbildet.

Eine solche Einrichtung zum Erzeugen eines viereckigen, leuchtenden Feldes wird beispielsweise in der Beleuchtungsoptik eines sogenannten digitalen Projektors eingesetzt, der neben der Beleuchtungsoptik noch ein im allgemeinen rechteckiges bilderzeugendes Element, wie z. B. eine Kippspiegel- oder LCD-Matrix, und eine Projektionsoptik zum Projizieren des durch das bilderzeugende Element erzeugten Bildes umfaßt. Bei einem solchen digitalen Projektor ist es für eine hohe Bildqualität erforderlich, daß das bilderzeugende Element mittels der Beleuchtungsoptik möglichst gleichmäßig ausgeleuchtet wird. Deswegen enthält die Beleuchtungsoptik den Lichtmischstab, dessen Austrittsfläche herkömmlicherweisé eine rechteckige Form aufweist, wenn das bilderzeugende Element rechteckig ist. Es hat sich jedoch gezeigt, daß zur Abbildung des leuchtenden Feldes in der Austrittsfläche des Lichtmischstabes auf das bilderzeugende Element eine aufwendige Optik notwendig ist, um eine möglichst verzeichnungsfreie Abbildung zu gewährleisten. Dabei tritt auch häufig noch die zusätzliche Schwierigkeit auf, daß die Austrittsfläche und die Fläche des bilderzeugenden Elementes nicht in zueinander parallelen Ebenen liegen, sondern gegeneinander geneigt sind, so daß auch dadurch Verzeichnungen auftreten, die zu einer verschlechterten Gleichmäßigkeit der Ausleuchtung des bilderzeugenden Elementes führen.

Ausgehend hiervon ist es Aufgabe der Erfindung, die Einrichtung zum Erzeugen eines viereckigen, leuchtenden Feldes der eingangs genannten Art so zu verbessern, daß mit ihr eine zu beleuchtende Fläche vorbestimmter Form möglichst gleichmäßig beleuchtet werden kann.

Erfindungsgemäß wird diese Aufgabe bei einer Einrichtung zum Erzeugen eines viereckigen, leuchtenden Feldes der eingangs genannten Art dadurch gelöst, daß die sich jeweils in einem Eckpunkt der Austrittsfläche treffenden zwei Seiten nicht rechtwinklig zusammenlaufen. Bevorzugt weisen alle vier Innenwinkel an den Eckpunkten voneinander verschiedene Werte auf. Dadurch kann die Form der Austrittsfläche des Lichtmischstabes so gewählt werden, daß die durch die Abbildung der Austrittsfläche auf die zu beleuchtende Fläche bedingte Verzeichnung kompensiert wird. Damit wird dann die zu beleuchtende Fläche gleichmäßig ausgeleuchtet. Der Lichtmischstab kann bevorzugt geradlinig oder auch abgewinkelt sein.

In einer vorteilhaften Weiterbildung der erfindungsgemäßen Vorrichtung ist der Lichtmischstab so ausgebildet, daß jede seiner Querschnittsflächen von vier geradlinigen Seiten begrenzt wird, die unter denselben Winkeln wie die Seiten der Austrittsfläche zusammenlaufen. Durch diesen Aufbau kann der Lichtmischstab einfach und mit der erforderlichen Genauigkeit hergestellt werden. So kann er beispielsweise als Vollmischstab durch Schleifen eines Rohlings oder als Hohlmischstab aus vier verspiegelten Platten gebildet werden.

Weiter kann die erfindungsgemäße Einrichtung dadurch weitergebildet werden, daß die Querschnittsfläche des Lichtmischstabes von der Eintrittsfläche bis zur Austrittsfläche hin abnimmt. Da bei einem Lichtmischstab das Produkt von Eintrittsfläche und Apertur der Eintrittsfläche gleich dem Produkt von Austrittsfläche und Apertur der Austrittsfläche ist, wird eine größere Apertur der Austrittsfläche möglich. Gleichzeitig kann die Eintrittsfläche groß ausgebildet werden, was zu einem leichten Einkoppeln des Lichts in den Lichtmischstab führt.

Eine besonders bevorzugte Weiterbildung der erfindungsgemäßen Einrichtung besteht darin, daß der Lichtmischstab aus einem für das Licht transparenten Material gebildet ist und somit ein Vollmischstab ist, bei dem das Licht, das nicht direkt von der Eintrittsfläche zur Austrittsfläche gelangt, durch Totalreflexion geführt wird. Da bei der Totalreflexion keinerlei Verluste auftreten und somit nur die durch die Materialabsorption bedingten Verluste vorhanden sind, wird fast das gesamte eingekoppelte Licht zur Austrittsfläche geführt, so daß ein sehr hoher Wirkungsgrad der Lichtübertragung verwirklicht wird. Des weiteren ist es noch vorteilhaft, daß ein übermäßiges Erwärmen des Lichtmischstabes verhindert wird, da bei der Totalreflexion keine Verluste auftreten, die zu einer Erwärmung beitragen könnten.

Eine besondere Weiterbildung der erfindungsgemäßen Einrichtung besteht darin, daß der Lichtmischstab einen Hohlquerschnitt aufweist, der durch vier sich von der Eintrittsfläche zur Austrittsfläche erstreckende reflektierende Flächen gebildet ist. Aufgrund dieses Aufbaus des Lichtmischstabes ist eine einfache und genaue Herstellung möglich. Ferner ist bei dieser Ausbildung besonders vorteilhaft, daß die Austrittsfläche nicht durch eine Endfläche des Materials, aus dem der Lichtmischstab hergestellt ist, gebildet ist, sondern der Bereich am Ende des Lichtmischstabes zwischen den vier reflektierenden Flächen ist, also in der Regel ein Luftabschnitt, da sich der Lichtmischstab herkömmlicherweise in Umgebungsatmosphäre und somit in Luft befindet. Dies führt zu dem Vorteil, daß sich keine Verschmutzungen oder Beschläge auf der Austrittsfläche bilden können, die die Gleichmäßigkeit des erzeugten viereckigen, leuchtenden Feldes nachteilig beeinflussen könnten.

Eine vorteilhafte Ausgestaltung der erfindungsgemäßen Einrichtung besteht darin, daß der Lichtmischstab aufgrund einer sich in Richtung von der Eintrittsfläche zur Austrittsfläche hin erstreckenden Unterteilung einen ersten und zweiten Lichtführungsbereich zum getrennten Führen von Anteilen des eingekoppelten Lichts aufweist. Dadurch wird es möglich, eine gezielte Ungleichmäßigkeit der Leuchtdichte in dem leuchtenden Feld zu erzeugen. Diese kann so ausgelegt werden, daß die zu beleuchtende Fläche gleichmäßig ausgeleuchtet wird.

Die erfindungsgemäße Einrichtung kann insbesondere bei einer Optikvorrichtung mit einer zu beleuchtenden Fläche vorbestimmter Form und einer Beleuchtungsoptik, die die Austrittsfläche auf die auszuleuchtende Fläche abbildet, verwendet werden. Bevorzugt umfaßt die Optikvorrichtung noch eine Projektionsoptik zum Projizieren der zu beleuchtenden Fläche auf eine Projektionsfläche. Somit wird eine Optikvorrichtung bereitgestellt, bei der aufgrund der erfindungsgemäßen Einrichtung eine gleichmäßigere Ausleuchtung der zu beleuchtenden Fläche ermöglicht wird, da die durch die Beleuchtungsoptik bedingten Verzeichnungen durch eine geeignete Wahl der Form der viereckigen Austrittsfläche des Lichtmischstabes kompensiert werden können.

Die Erfindung wird nachfolgend anhand der Zeichnungen im Prinzip beispielshalber noch näher erläutert. Es zeigen:
- Fig. 1: eine perspektivische Darstellung eines erfindungsgemäßen Lichtmischstabes;
- Fig. 2: eine Vorderansicht des erfindungsgemäßen Lichtmischstabes von Fig. 1;
- Fig. 3: eine prinzipielle Darstellung einer erfindungsgemäßen Optikvorrichtung mit dem in Fig. 1 und 2 gezeigten erfindungsgemäßen Lichtmischstab;
- Fig. 4: eine Vorderansicht eines erfindungsgemäßen Lichtmischstabes gemäß einer anderen Ausführungsform, und
- Fig. 5: eine Vorderansicht einer Weiterbildung des Lichtmischstabes von Fig. 4.

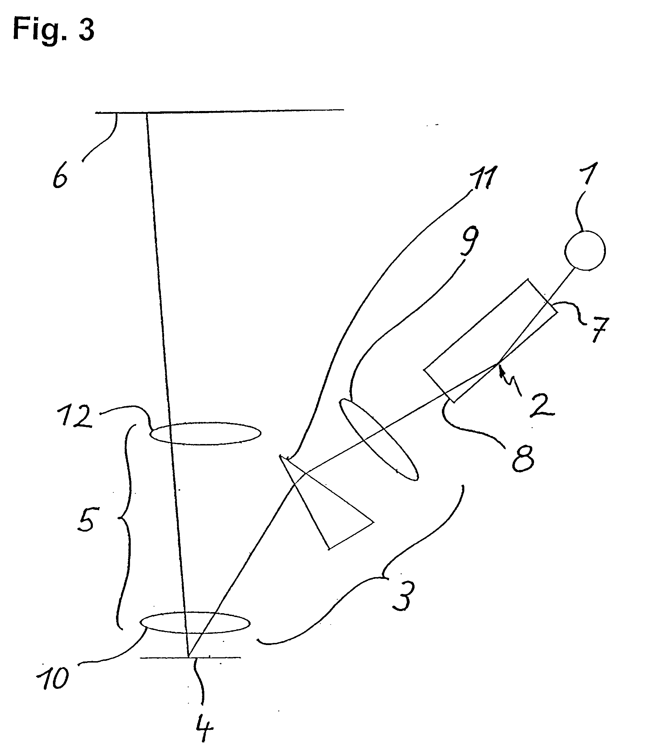

In Fig. 3 ist eine erfindungsgemäße Projektionsvorrichtung schematisch in Draufsicht gezeigt, wobei ein Strahlenverlauf beispielhaft eingezeichnet ist. Die Projektionsvorrichtung enthält eine Lichtquelle 1, einen Lichtmischstab 2, in den Licht der Lichtquelle 1 eingekoppelt werden kann, und eine dem Lichtmischstab 2 nachgeschaltete Beleuchtungsoptik 3, die mit dem aus dem Lichtmischstab 2 austretenden Licht eine zu beleuchtende Fläche 4 ausleuchten kann. Die zu beleuchtende Fläche 4 ist bevorzugt ein bilderzeugendes Element und kann beispielsweise eine Kippspiegelmatrix oder eine LCD-Matrix mit viereckiger, insbesondere rechteckiger oder quadratischer Form sein. Die Projektionsvorrichtung umfaßt ferner noch eine Projektionsoptik 5, mit der die zu beleuchtende Fläche 4 auf eine Projektionsfläche 6 projiziert werden kann.

Der Lichtmischstab 2 weist eine der Lichtquelle 1 zugewandte Eintrittsfläche 7 und eine der Beleuchtungsoptik 3 zugewandte Austrittsfläche 8 auf. Er ist dabei so angeordnet, daß die Austrittsfläche 8 sowohl in der in Fig. 3 gezeigten Draufsicht gesehen als auch in einer Seitenansicht der Projektionsvorrichtung gesehen nicht parallel zur zu beleuchtenden Fläche 4 ist, sondern jeweils einen Winkel mit dieser einschließt.

Die Beleuchtungsoptik 3 ist so ausgelegt, daß die Austrittsfläche 8 auf die zu beleuchtende Fläche 4 abgebildet wird, und weist dazu Linseneinheiten 9, 10 und eine Umlenkprisma 11 auf. In dem Umlenkprisma 11 wird das aus dem Lichtmischstab 2 austretende Licht nur durch Brechung und nicht durch Reflexion umgelenkt.

Die Projektionsoptik 5 umfaßt die Linseneinheit 10 sowie eine weitere Linseneinheit 12. Durch die Verwendung des Umlenkprismas 11 und dadurch, daß die Linseneinheit 10 sowohl für die Beleuchtungsoptik 3 als auch für die Projektionsoptik 5 eingesetzt wird, kann eine sehr kompakte Projektionsvorrichtung gebildet werden.

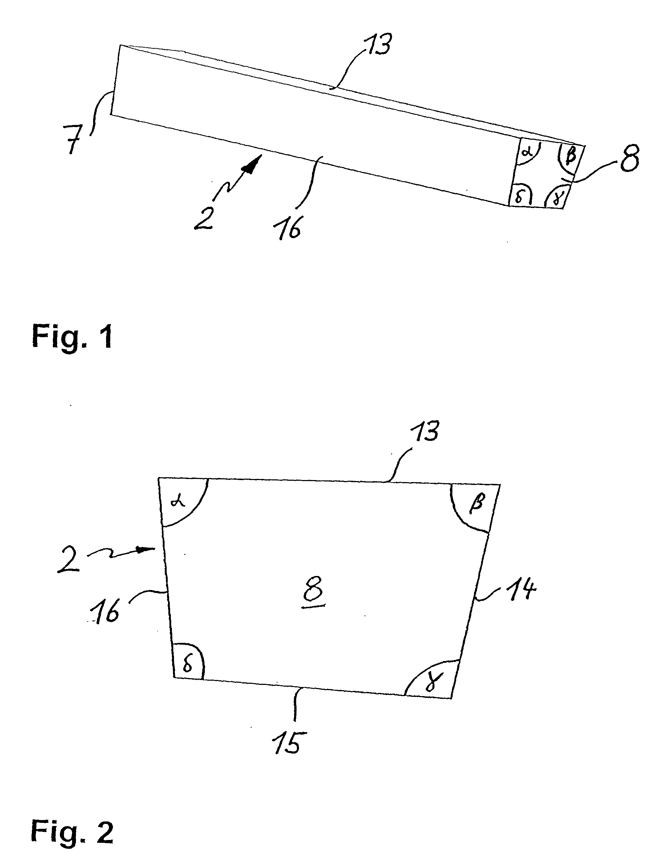

Der Lichtmischstab 2 besteht, wie am besten aus den Fig. 1 und 2 ersichtlich, aus einem für das Licht der Lichtquelle 1 transparenten Material und führt die Lichtstrahlen, die nicht direkt von der Eintrittsfläche 7 zur Austrittsfläche 8 gelangen, durch Totalreflexion an den Grenzflächen zwischen den Seitenflächen 13, 14, 15 und 16 des Lichtmischstabs 2 und der Umgebung von der Eintrittsfläche 7 zur Austrittsfläche 8. Ein solcher Lichtmischstab 2 wird als "Vollmischstab" bezeichnet.

Die Form des Lichtmischstabes 2 ist so gewählt, daß er einen viereckigen Querschnitt ausbildet, wobei bei der viereckigen Austrittsfläche 8 jeder Innenwinkel α, β, γ, *δ* einen anderen Wert aufweist und jeweils ungleich 90° ist. Die Innenwinkel α, β, γ, δ sind dabei so gewählt, daß die durch die relative Lage der Austrittsfläche 8 des Lichtmischstabes 2 zur zu beleuchtenden Fläche 4 und durch die Beleuchtungsoptik 3 bedingte Verzeichnung bei der Abbildung der Austrittsfläche 8 so kompensiert wird, daß die zu beleuchtende Fläche 4, die hier eine rechteckige Fläche ist, gleichmäßig ausgeleuchtet wird. Bevorzugt werden die Beleuchtungsoptik 3 und der Lichtmischstab 2 so ausgelegt, daß die zu beleuchtende Fläche 4 etwas überleuchtet wird, d. h., die abgebildete Austrittsfläche 8 ist etwas größer als die zu beleuchtende Fläche 4 und steht an allen vier Seiten der zu beleuchtenden Fläche 4 über. Dadurch wird beispielsweise die Ausleuchtung der zu beleuchtenden Fläche 4 sichergestellt, wenn die Abbildung der Austrittsfläche doch noch geringfügig von der Rechteckform abweicht oder wenn die Ausrichtung der zu beleuchtenden Fläche 4 nicht optimal ist.

Der Vollmischstab 2 kann beispielsweise aus einem quaderförmigen Rohling durch Schleifen und Polieren hergestellt werden.

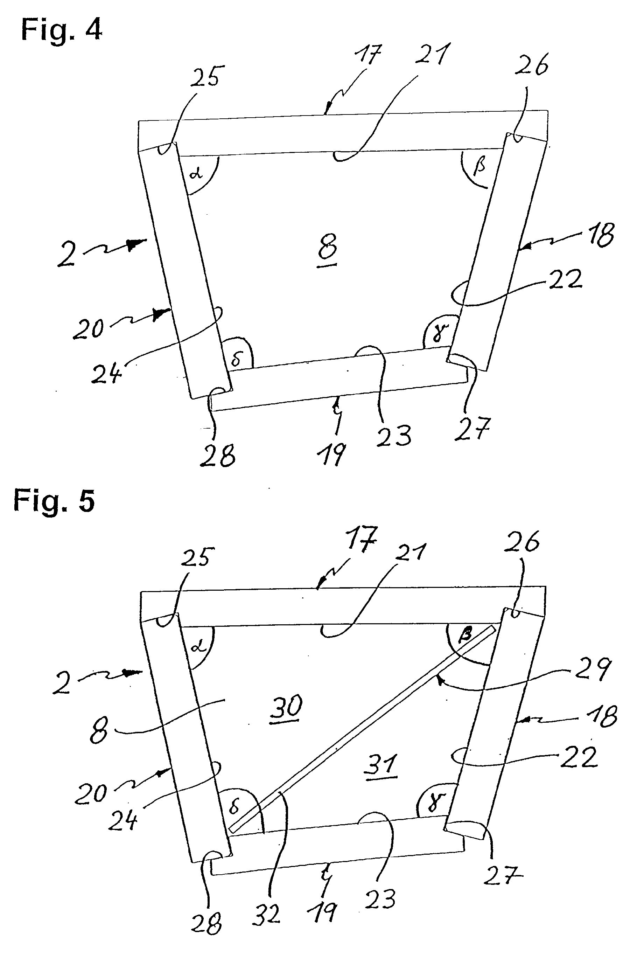

Alternativ kann der Lichtmischstab 2 als Hohlmischstab ausgebildet sein, wie dies in Fig. 4 gezeigt ist. Bei dieser Ausführungsform wird der Mischstab durch vier Seitenplatten 17, 18, 19 und 20 gebildet, deren Innenflächen 21, 22, 23 und 24 verspiegelt sind.

Die vier Seitenplatten 17 bis 20 bilden jeweils einen im wesentlichen rechteckigen Querschnitt aus, wobei die Seitenplatten 17 und 19 an ihren Innenseiten an beiden Enden Ausfräsungen 25, 26, 27 und 28 aufweisen, die sich in der Richtung von der Eintrittsfläche 7 zur Austrittsfläche 8 erstrecken. Diese Ausfräsungen 25, 26, 27, 28, in denen die Seitenplatten 18 und 20 eingesetzt sind, sind so ausgebildet, daß im zusammengebauten Zustand, der in Fig. 4 gezeigt ist, die gewünschten Innenwinkel α, β, γ, δ vorliegen. Bevorzugt werden die Seitenplatten 17 bis 20 dadurch zusammengehalten, daß in dem in Fig. 4 gezeigten Zustand ein Schrumpfschlauch (nicht gezeigt) über die Seitenplatten 17 bis 20 übergestülpt wird, der danach erwärmt wird und sich zusammenzieht, so daß die Seitenplatten 17 bis 20 unter elastischer Vorspannung aneinander gedrückt werden. Dieser Schrumpfschlauch kann beispielsweise in einem Mittelabschnitt des Lichtmischstabes 2 angeordnet werden. Es können auch zwei Schrumpfschläuche vorgesehen werden, einer an einem an der Eintrittsfläche 7 und einer an einem an der Austrittsfläche 8 angrenzenden Bereich.

Fig. 5 zeigt eine Weiterbildung des in Fig. 4 gezeigten Hohlmischstabes. Bei dieser Weiterbildung ist eine Unterteilung in Form einer beidseitig verspiegelten Platte 29 vorgesehen, die sich in Richtung von der Eintrittsfläche 7 zur Austrittsfläche 8 hin erstreckt und, wie der Fig. 5 zu entnehmen ist, im Querschnitt diagonal im Lichtmischstab 2 angeordnet ist. Diese beidseitig verspiegelte Platte 29 erstreckt sich bevorzugt von der Eintrittsfläche 7 um eine vorbestimmte Länge in den Lichtmischstab 2, wobei die vorbestimmte Länge die Hälfte bis ein Drittel der Länge des Lichtmischstabes 2 betragen kann. Durch diese Unterteilung werden ein erster und ein zweiter Lichtführungsbereich 30 und 31 gebildet, die im Querschnitt gesehen jeweils eine Dreiecksform aufweisen. Aufgrund dieser Querschnittsform ist die Leuchtdichteverteilung am Ende der Lichtführungsbereiche 30 und 31 anders als an der gleichen Stelle in dem in Fig. 4 gezeigten Lichtmischstab, so daß auch die Leuchtdichteverteilung in der Austrittsfläche 8 verschieden von der des in Fig. 4 gezeigten Lichtmischstabes 2 ist. Somit führt die Unterteilung zu einer gezielten Inhomogenisierung der Leuchtdichteverteilung in der Austrittsfläche 8, wobei dieser Effekt um so größer ist, je länger die Platte 29 ist. Dies kann dazu eingesetzt werden, daß z. B. bei der in Fig. 3 gezeigten Projektionsvorrichtung die zu beleuchtende Fläche 4 noch gleichmäßiger ausgeleuchtet wird. Die Platte 29 ist bevorzugt so im Lichtmischstab 2 angeordnet, daß ihre der Austrittsfläche 8 zugewandte Stirnseite 32 nicht in der Austrittsfläche liegt, sondern innerhalb des Lichtmischstabs 2. Die Stirnseite 32 und die entsprechende entgegengesetzte Stirnseite am anderen Plattenende können, wenn die Platte 29 aus einem für das Licht transparenten Material gebildet ist, poliert und eben sein, so daß die Platte 29 als Lichtleiter für das auf die entgegengesetzte Stirnseite treffende Licht dient. Dann treten nur die geringen Reflexions- und Absorptionsverluste auf, wodurch vorteilhaft durch die Platte 29 nur sehr geringe Verluste verursacht werden. Alternativ kann die entgegengesetzte Stirnseite auch geschwärzt sein, so daß das darauf treffende Licht nicht weitergeleitet, sondern abgeschattet wird.

In einer weiteren bevorzugten Ausgestaltung der Erfindung kann eine solche Unterteilung entsprechend der Ausführungsform von Fig. 5 auch bei einem Vollmischstab gebildet werden. Dazu wird der Anfangsabschnitt des Lichtmischstabs 2, der die Unterteilung aufweisen soll, durch zwei mittels eines Spaltes getrennten Prismen gebildet. An den Grenzflächen der Prismenflächen und des Spaltes findet für Lichtstrahlen mit vorbestimmten Winkeln eine Totalreflexion statt, so daß durch den Spalt zwischen den Prismen auch eine Unterteilung gebildet ist, die zur Inhomogenisierung der Leuchtdichteverteilung in der Austrittsfläche 8 führt.

## Patentansprüche

1. Einrichtung zum Erzeugen eines viereckigen, leuchtenden Feldes, mit einem einen viereckigen Querschnitt aufweisenden Lichtmischstab (2), der eine viereckige Eintrittsfläche (7) und eine viereckige Austrittsfläche (8) aufweist und der über die Eintrittsfläche (7) eingekoppeltes Licht zur Austrittsfläche (8) führt, um in dieser das viereckige, leuchtende Feld zu erzeugen, wobei die Austrittsfläche (8) von vier geradlinigen Seiten begrenzt ist, von denen sich jeweils zwei in einem der Eckpunkte der Austrittsfläche (8) treffen, **dadurch gekennzeichnet, daß** die sich in einem Eckpunkt treffenden Seiten jeweils unter einem Winkel zusammenlaufen, der ungleich 90° ist.

2. Einrichtung nach Anspruch 1, **dadurch gekennzeichnet, daß** die Seiten in jedem Eckpunkt unter einem Winkel (α, β, y, δ) mit unterschiedlicher Größe zusammenlaufen.

3. Einrichtung nach Anspruch 1 oder 2, **dadurch gekennzeichnet, daß** der Lichtmischstab (2) so ausgebildet ist, daß jede seiner Querschnittsflächen vier geradlinige Seiten aufweist, die unter denselben Winkeln wie die Seiten der Austrittsfläche (8) zusammenlaufen.

4. Einrichtung nach einem der Ansprüche 1 bis 3, **dadurch gekennzeichnet, daß** die Querschnittsfläche des Lichtmischstabes (2) von der Eintrittsfläche (7) bis zur Austrittsfläche (8) hin abnimmt.

5. Einrichtung nach einem der Ansprüche 1 bis 4, **dadurch gekennzeichnet, daß** der Lichtmischstab (2) ein aus einem für Licht transparenten Material gebildeter Vollmischstab ist.

6. Einrichtung nach einem der Ansprüche 1 bis 4, **dadurch gekennzeichnet, daß** der Lichtmischstab (2) einen Hohlquerschnitt aufweist, der durch vier sich von seiner Eintrittsfläche (7) bis zur Austrittsfläche (8) erstreckende reflektierende Flächen (21, 22, 23, 24) gebildet ist.

7. Einrichtung nach einem der Ansprüche 1 bis 6, **dadurch gekennzeichnet, daß** der Lichtmischstab (2) aufgrund einer sich in Richtung von der Eintrittsfläche (7) zur Austrittsfläche (8) hin erstreckenden Unterteilung (29) einen ersten und einen zweiten Lichtführungsbereich (30, 31) zum getrennten Führen von Anteilen des eingekoppelten Lichts aufweist.

8. Verwendung einer Einrichtung zum Erzeugen eines viereckigen, leuchtenden Feldes nach einem der Ansprüche 1 bis 7 bei einer Optikvorrichtung mit einer zu beleuchtenden Fläche (4) vorbestimmter Form und einer Beleuchtungsoptik (3), die die Austrittsfläche (8) auf die zu beleuchtende Fläche (4) abbildet.

9. Verwendung nach Anspruch 8, wobei die Optikvorrichtung weiter eine Projektionsoptik (5) zum Projizieren der zu beleuchtenden Fläche (4) auf eine Projektionsfläche (6) umfaßt.
